# EUROPEAN PATENT SPECIFICATION

(11) **EP 1 807 894 B1**
(45) Date of publication and mention of the grant of the patent: **18.07.2012**
(21) Application number: 05811077.6
(22) Date of filing: 02.11.2005
(51) Int. Cl.: H01M 8/02, H01M 8/24, H01M 8/12, H01M 8/04, F28D 9/00, F28F 21/04, F28F 3/08

(54) **SOLID OXIDE FUEL CELL SYSTEM**
FESTOXID-BRENNSTOFFZELLENSYSTEM
SYSTEME DE PILE A OXYDE SOLIDE (SOFC)

(30) Priority: 02.11.2004 EP 04025914
(43) Date of publication of application: 18.07.2007
(73) Proprietor: HTceramix S.A. - High Technology Electroceramics, 1400 Yverdon-les-Bains (CH)
(72) Inventor: SCHILD, John, CH-8472 Seuzach (CH)
(74) Representative: Dr. Graf & Partner AG
(86) International application number: PCT/EP2005/055714
(87) International publication number: WO 2006/048429

(56) References cited:
- EP-A- 1 202 366
- WO-A-97/24776
- US-A1- 2001 036 568
- US-A1- 2001 049 039

## Description

### TECHNICAL FIELD

The present invention relates to a solid oxide fuel cell (SOFC) system for generating electric power by combination of oxygen with a fuel gas stream, including a solid oxide fuel cell and a heat exchanger.

### BACKGROUND OF THE INVENTION

Fuel cells which generate electric power by the electrochemical combination of hydrogen and oxygen are well known. In one form of such a fuel cell, an anodic layer and a cathodic layer are separated by an electrolyte formed of a ceramic solid oxide. Such a fuel cell is known in the art as a "solid oxide fuel cell" (SOFC). A fuel gas stream comprising hydrogen, either pure or reformed from hydrocarbons, and oxygen, typically air, are to be brought into the fuel cell. A complete SOFC system typically includes auxiliary subsystems for, among other requirements, generating the fuel gas stream by processing hydrocarbons into carbon monoxide and hydrogen, tempering the reformate fuel and air entering the fuel cell, providing air to the cathode for reaction with hydrogen in the fuel cell, providing air for cooling the fuel cell stack, and burning unused fuel in an afterburner. Such an auxiliary subsystem can attain a complexity comparable to that of the fuel cell. Document US 2001/049039 discloses such a SOFC system, comprising for example a separate heat exchanger with a plurality of channels and gas inlets and outlets. The heat exchanger comprises a series of connected plate structures of up to several hundred metal sheets. This system is quite expensive and not reliable.

### SUMMARY OF THE INVENTION

It is an object of the present invention to improve this type of SOFC system in such a manner that the system as a whole can be simplified.

This object is solved with a SOFC system comprising the features of claim 1. Sub claims 2 to 24 concern further advantageous embodiments.

Accordingly, it is an inventive concept to integrate and thermally couple a fuel channel with a heat exchanger, wherein the heat exchanger is a unit separate from the fuel cell and consisting of ceramics. In one preferred embodiment the heat exchanger and the fuel cell are combined with one another in such a manner that the heat exchanger is disposed directly at the fuel cell, and that corresponding inlet port and outlet ports of the fuel cell and the heat exchanger, enabling the gas stream flow between the fuel cell and the heat exchanger, are arranged opposite to each other. By this arrangement, a direct flow transition from the heat exchanger to the fuel cell can be achieved. The heat exchanger comprises various conveying means which are arranged in a way that a separate so-called manifold can be omitted. In other words the heat exchanger itself comprises various conveying means and forms therefore a kind of manifold. The heat exchanger, consisting of ceramics with poor thermal conductivity, forms also a heat insulation element between the side directed to the fuel cell side having high gas temperatures, and the opposite side having lower gas temperatures. As a result of this coupling, space is saved, since an additional housing and pipeline systems can be omitted, and because of the poor thermal conductivity a small heat exchanger is sufficient to separate the high temperature side from the low temperature side. In addition, the manufacturing costs of the heat exchanger are low, leading to a fuel cell system with a reduction in space and costs. Moreover the fuel channel in the heat exchanger may also comprise a catalytic fuel processor. Moreover, to increase the preheating of the air, the heat exchanger may comprise a chamber which allows the residual gas from the fuel cell to be subjected to an afterburning process. Due to the successful combustion in the heat exchanger, this residual energy is then also, at least partly, supplied to the reactants, which are to be heated, preferably air or oxygen is used for this purpose. Moreover to improve the control of the reactant's temperature and/or the reactant's amount, the heat exchanger may comprise a separate air stream bypass, which joins the preheated air stream before entering the fuel cell. A temperature sensor, a control system and a valve may be suitable to control temperature and/or amount of the air stream supplied into the fuel cell. Moreover the whole fuel cell system may be built very small, preferably in form of a pile, the fuel cell being arranged on top of the heat exchanger. Moreover all conveying means between the fuel cell and the heat exchanger may be arranged within the area in common of the heat exchanger and the fuel cell, which allows building a stack without, from the outside, any visible connection between the fuel cell and the heat exchanger.

### BRIEF DESCRIPTION OF THE DRAWINGS

These and other features and advantages of the invention will be more fully understood and appreciated from the following description of certain exemplary embodiments of the invention taken together with the accompanying drawings, in which like numerals represent like components:
- Fig. 1: is a schematic diagram of a SOFC system;
- Fig. 2: is an isometric cross-sectional view of a SOFC system;
- Fig. 3: is an isometric cross-sectional view of another SOFC system;
- Fig. 4: is an isometric view of a heat exchanger;
- Fig. 5a: is a cross-sectional view of the heat exchanger taken along line A-A in Fig. 4;
- Fig. 5b: is a cross-sectional view of the heat exchanger taken along line B-B in Fig. 4;
- Fig. 6: is an isometric view of the SOFC system from below;
- Fig. 7: is a schematic diagram of another SOFC system without an air stream bypass;
- Fig. 8: is a schematic view of a fuel cell stack with internal manifolding;
- Fig. 9: is a schematic view of a fuel cell stack with internal fuel gas and air manifolding but external exhaust air manifolding;
- Fig. 10: is a schematic view of a fuel cell stack with combined external air and internal fuel gas manifolding;
- Fig. 11: is a schematic view of a fuel cell stack with external manifolding;
- Fig. 12: is an isometric cross-sectional view of a further SOFC system;
- Fig. 13: is an isometric cross-sectional view of a further heat exchanger.

### DESCRIPTION OF THE PREFERRED EMBODIMENTS

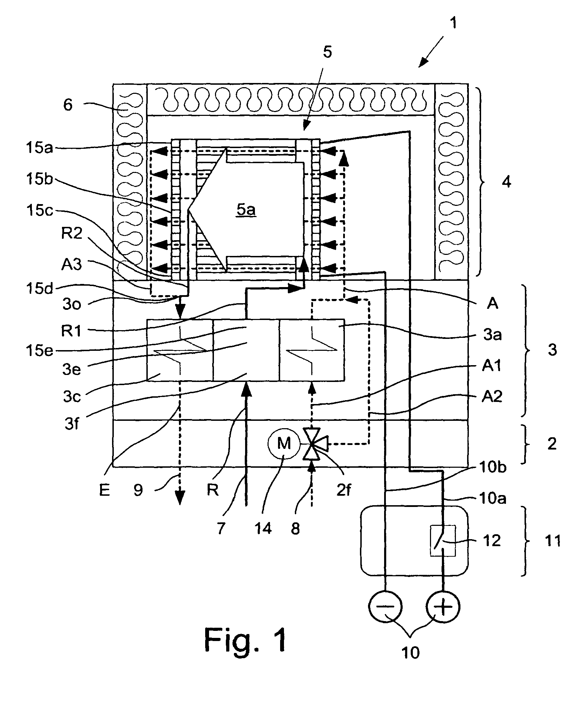

Figure 1 discloses a SOFC system 1 comprising an interface base 2, a heat exchanger 3 and a high temperature unit 4, comprising a SOFC fuel cell 5 and insulation 6. The interface base 2, the heat exchanger 3 and the fuel cell 5 are arranged one on top of the other, forming an arrangement similar to a pile. This pile can be arranged in different ways, for example also vice versa as disclosed in figure 1, with the fuel cell 5 on the bottom end and the interface base 2 on the top end. The fuel cell 5 is supplied with an air stream A and a fuel gas stream R1. An electrochemical reaction 5a takes place within the fuel cell stack. A cathode exhaust A3 and an anode exhaust R2 leaving the fuel cell stack. The cathode exhaust A3 is typically primarily air (oxygen depleted). The anode exhaust R2 contains unoxidized fuel species such as carbon monoxide, hydrogen containing some remaining hydrocarbons.

The heat exchanger 3 comprises a first fluid path 3a, a second fluid path 3c and a fuel channel 3f, which might be catalytic fuel processor 3e, wherein all of them are thermally coupled. The heat exchanger 3 consisting of ceramics with various gas stream conveying means. The interface base 2 is connected with a reactant gas supply 7, an exhaust gas outlet 9 and an air supply 8 leading to a valve 2f which is electrically operated by a drive 14. Depending on the position of the valve 2f, the ratio between the air stream A1 and the bypass air stream A2 is varied. The air stream A1 is preheated by passing through the first fluid path 3a of the heat exchanger 3. The anode exhaust R2 and the cathode exhaust A3 is directed into an afterburner 3o which is part of the heat exchanger 3. The afterburner 3o burns the unused fuel in the SOFC stack exhaust. The afterburner 3o may be a separate chamber within the heat exchanger 3, or for example arranged within the second fluid path 3c. The afterburner 3o may comprise catalytic material, for example a catalytic coating of the walls. The exhaust gas E is fed through the second fluid path 3c and the heat produced by the afterburner 3o is exchanged to the first fluid path 3a and the fuel channel 3f, to preheat the air stream A1, and, if necessary the fuel gas stream R. It is preferred to use the cathode exhaust A3 in the afterburner 3o, as this oxygen containing stream A3 is heated in the fuel cell 5, in addition a separate oxygen containing stream may be added, to permit complete combustion of the remaining fuel in the afterburner 3o.

The SOFC system 1 comprises a control unit 11, which is connected to various sensors 15a-15e, in particular temperature sensors, as well as to drive means 14, to move the valve 2f and to control the various temperatures in the SOFC system 1. The control unit 11 also comprises an electrical output 10, which is connected with the cathode and anode current collector 10a, 10b as well as a electronic switch 12.

The heat exchanger 3 consists of ceramics. This means the heat exchanger 3 is made of hard brittle material produced from non-metallic minerals by firing at high temperatures. These materials include, but are not limited to ceramics, zirconium phosphate, silicon nitride, aluminium nitride, molybdenum disilicide, zirconia toughened aluminium oxide, aluminium phosphate, zirconium oxide, titanium carbide, aluminium oxide, zirconium carbide, zirconium disilicide, alumino-silicates, and silicon carbide. Ceramics is an excellent choice for the heat exchanger 3 because of the low thermal conductivity and the low thermal expansion coefficient.

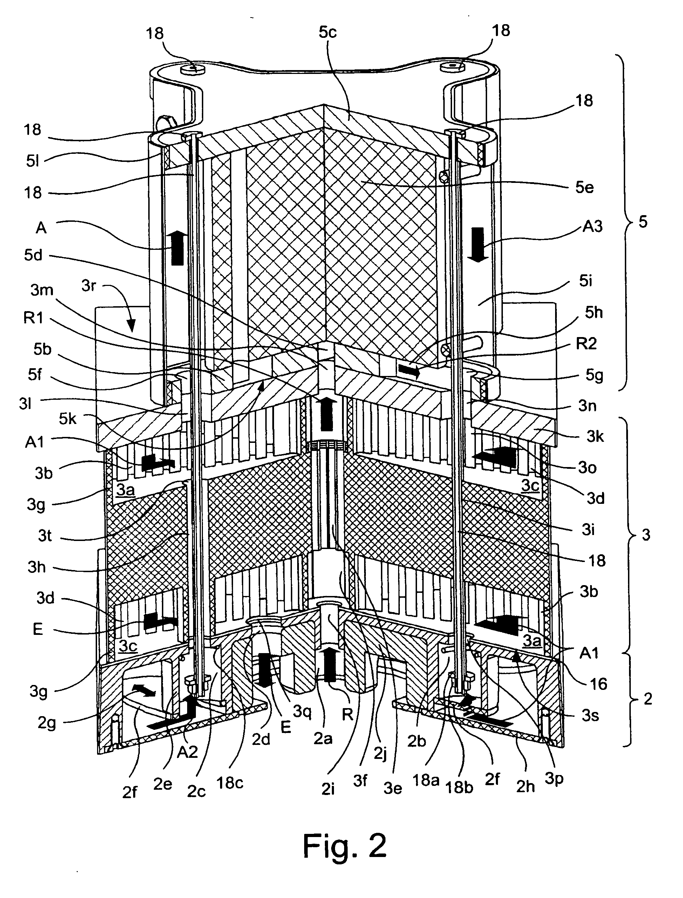

The SOFC system 1 according to figure 2 includes a fuel cell 5 having a fuel gas inlet port 5d, an air stream inlet port 5f and an exhaust gas stream outlet port 5g, and comprises a heat exchanger 3 with a fuel channel 3f comprising a catalytic fuel processor 3e, wherein said heat exchanger 3 comprises a first fluid path 3a with an inlet port 3p connected to an air supply 7 and an air stream outlet port 31 connected to the air stream inlet port 5f, and wherein said heat exchanger 3 comprises a second fluid path 3c with an outlet port 3q connected to the exhaust gas outlet 9 and an exhaust gas stream inlet port 3n connected to the exhaust gas stream outlet port 5g, and wherein said catalytic fuel processor 3e comprising an inlet port 2i connected to a fuel supply 7 and a fuel gas outlet port 3m connected to the fuel gas inlet port 5d, wherein the catalytic fuel processor 3e is thermally coupled to at least one of the first and second fluid path 3a,3c, and wherein said heat exchanger 3 is a unit separate from the fuel cell 5 and consisting of ceramics. The fuel cell 5 comprising a bottom plate 5b, a top plate 5c and there between a plated stack 5e. Where the cathode exhaust stream A3 and the anode exhaust stream R2 meet, they form an afterburner 3o.

The heat exchanger 3 is a monolithic ceramic. The heat exchanger 3 could also consist of various ceramic parts joined together to form the heat exchanger 3. The heat exchanger 3 comprising a base plate 3k suitable to be connected with the fuel cell 5. In one preferred embodiment the base plate 3k is sintered with the part of the heat exchanger 3 below the base plate 3k, forming one single, monolithic piece of ceramic. In one preferred embodiment the fuel cell 5 is arranged on top of the base plate 3k, and the base plate 3k having a thickness of being able to carry the fuel cell 5. In one preferred embodiment the air stream outlet port 31, the fuel gas outlet port 3m and the exhaust gas stream inlet port 3n are arranged on a common front surface 3r of the base plate 3k. In one preferred embodiment are the inlet port 3p connected to the air supply, the outlet port 3q of the exhaust gas stream E and the inlet port 2i connected to the fuel supply R arranged on a side 3s of the heat exchanger 3 opposite to the front surface 3r.

In one preferred embodiment are the fuel gas inlet port 5d, the air stream inlet port 5f and the exhaust gas stream outlet port 5g arranged on a common front surface 5k of the fuel cell 5. In the most preferred embodiment the fuel cell 5 is arranged on top of the heat exchanger 3, wherein the corresponding inlet ports 5f, 3n,5d and outlet ports 31,5g,3m, enabling the gas stream flow between the fuel cell 5 and the heat exchanger 3, are arranged opposite to each other, to enable a direct flow transition between the fuel cell 5 and the heat exchanger 3, as shown in figure 2. As can be seen, this arrangement allows building a very compact SOFC system 1. The interface base 2 being the cold side and the fuel cell 5 being the hot side of the SOFC system 1, and the interface base 2 and the fuel cell 5 being separated by the ceramic heat exchanger 3. The heat exchanger 3 has poor thermal conductivity from the fuel cell 5 to the interface base 2. The heat exchanger 3 also comprises all fluid conducting connections between the fuel cell 5 and the interface base 2, thus forming a manifold of ceramics. All fluid conducting connections are arranged within the heat exchanger 3. This ceramic heat exchanger 3 allows building a very compact, cheap and reliable SOFC system 1.

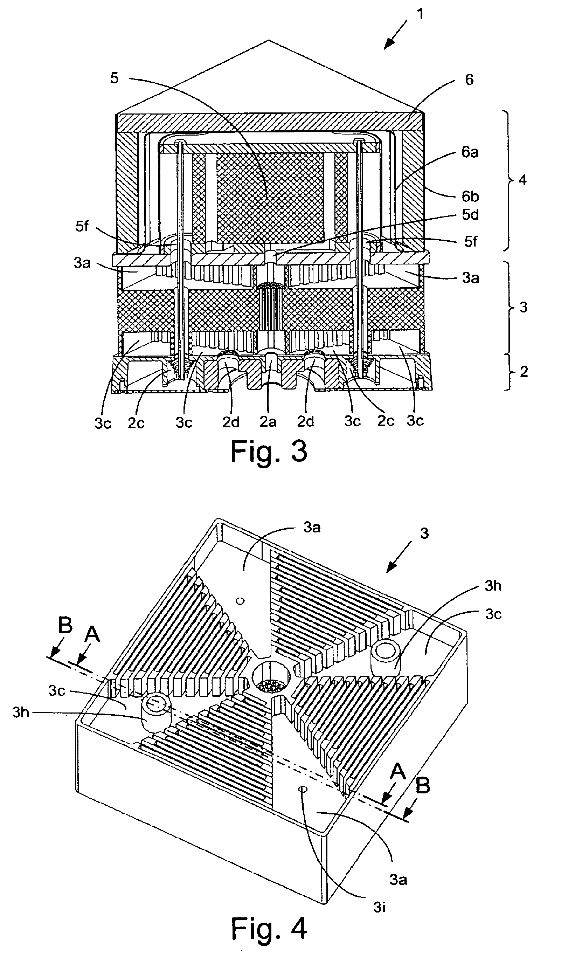

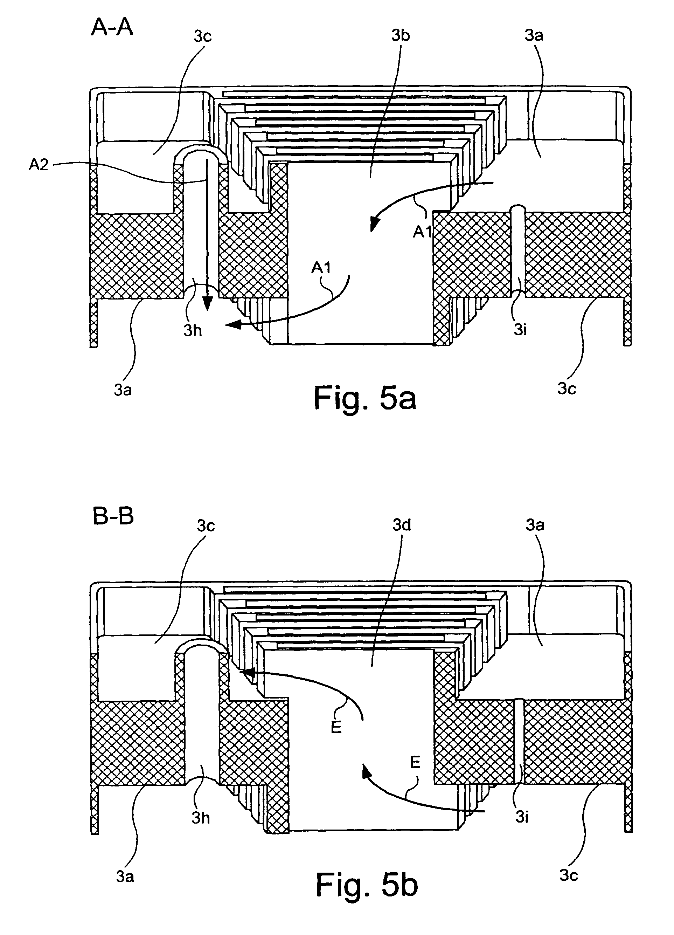

In a preferred embodiment each of the first and second fluid path 3a,3c comprise a plurality of first and second channels 3b,3d separated by a thin wall, to allow a heat exchange between the exhaust gas stream E flowing in the second channel 3d and the air stream A1 flowing in the first channel 3b. Figure 4 shows the heat exchanger 3 according to figure 2 in detail, with a plurality of first and second channels 3b,3d. Figure 5a discloses a cross-sectional view of the heat exchanger 3 taken along line A-A in figure 4, and figure 5b a cross-sectional view along the line B-B in figure 4. The plurality of first and second channels 3b,3d are arranged to form a counter cross flow between the first and second fluid path 3a,3c, as can be seen with the crossing flow of the air stream A1 and exhaust gas stream E in figures 5a,5b.

The afterburner 3o may also be arranged within the second fluid path 3c, in that the cathode exhaust stream A3 and the anode exhaust stream R2 are guided either separately or as disclosed in figure 2 within the heat exchanger 3, to form therein an afterburner 3o.

The catalytic fuel processor 3e disclosed in figure 2 is arranged within the channel 3f, therein a ceramic cell structure forming channels in the direction of flow. The walls of this cell structure carrying catalytic substances to form a catalytic fuel processor. Preferable these catalytic substances are arranged on the ceramic material of the heat exchanger. In combination with preprocessed fuel or pure hydrogen the catalytic fuel processor 3e may be replaced by a channel 3f only, without further structures inside.

In a preferred embodiment, the heat exchanger 3 comprises an air stream bypass 3h with an inlet port 2c connected to an air supply 8 and an air stream bypass outlet port 3t disposed in fluid communication with the air stream outlet port 31. At least one valve 2f, comprising a valve seat 2e and a plate 2f moveable in direction 2g by a drive 14, is disposed to control at least one of the air streams A1,A2 in the first fluid path 3a and the air stream bypass 3h. This allows to control the temperature of the air stream A entering the air stream inlet port 5f. The valve 2f is part of the interface base 2. In a preferred embodiment, the interface base 2 comprises two or four valves 2f, one for each air stream A1,A2. Each valve 2f can be activated independently, to control each air stream A1, A2 as well as the total amount of the air stream A. The interface base 2 is disposed below the heat exchanger 3, the interface base 2 comprising a fuel gas stream inlet port 2a, an air stream inlet port 2b,2c and a exhaust gas stream outlet port 2d, which are fluidly connected to the corresponding first and second fluid path 3a,3c, the fuel gas stream channel 3f and the exhaust gas stream outlet port 3q of the heat exchanger 3. The fuel gas stream inlet port 2a, the air stream inlet port 2b, 2c and the exhaust gas stream outlet port 2d are arranged at the bottom of the interface base 2. The interface base 2 is coupled to the heat exchanger 3 so that there is a direct flow transition from the interface base 2 to the heat exchanger 3, the heat exchanger 3 being placed on top of the interface base 2 and the fuel cell 5 being placed on top of the heat exchanger 3. In a preferred embodiment, the interface base 2 and the fuel cell 5 are connected by compressing means 18 extending in holes 3i or in the bypass 3h through the heat exchanger 3. The compressing means 18 disclosed in figure 2 comprising a ceramic disk 18a, a nut 18b and a spring 18c.

To improve the heat exchange, the walls of the heat exchanger 3 forming the first and second fluid path 3a,3c as well as the catalytic fuel processor 3e may be structured or rough. According to figure 2, the interface base 2 is of metal, comprising a exhaust gas insulation 2j of ceramics, and being covered by a thin sealing material 16. The outer wall 3g of the heat exchanger 3 lying on the sealing material 16, to enact a preferable gas tight connection, so the first and second fluid path 3a,3c is gastight to the outside of the SOFC system 1.

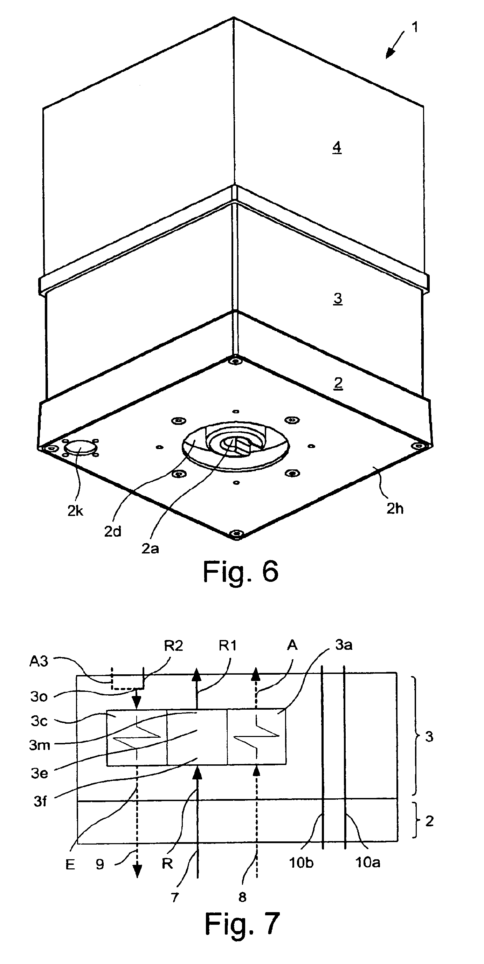

Figure 3 shows another SOFC system 1 built in form of a stack comprising the interface base 2, the heat exchanger 3 and the high temperature unit 4. The high temperature unit 4 comprises the fuel cell 5 arranged within an insulation 6 with an inner and outer metallic shell 6a,6b. Due to the low thermal conductivity of the ceramic heat exchanger 3, the height of the heat exchanger 3 may be very small, for example in the range of 5 cm to 30 cm. This allows building a small and compact SOFC system 1, as shown in figure 6. In a preferred embodiment all gas stream inlet and outlet ports, the fuel gas stream inlet port 2a, the exhaust gas stream outlet port 2d, the air stream inlet port 2k as well as other ports and electric connectors are arranged on the bottom side of the interface base 2. In one embodiment, the inner and outer metallic shell 6a,6b may comprise or form a fluid tight room, in particular a gas tight room. This room may contain a vacuum to improve insulation. This room may also comprise a fluid inlet and outlet, to create a vacuum or to pressurize the room with a certain substance like air. The insulation value of this insulation 6 may be varied depending on the pressure and the used substance, allowing modifying the insulation value during operation of the SOFC system 1 by increasing the pressure or the vacuum within the insulation 6 by means like a pump and sensors, which are not shown in figure 3.

Figure 7 shows a heat exchanger 3 without a bypass air stream A2, which means the whole air stream A is guided through the first fluid path 3a.

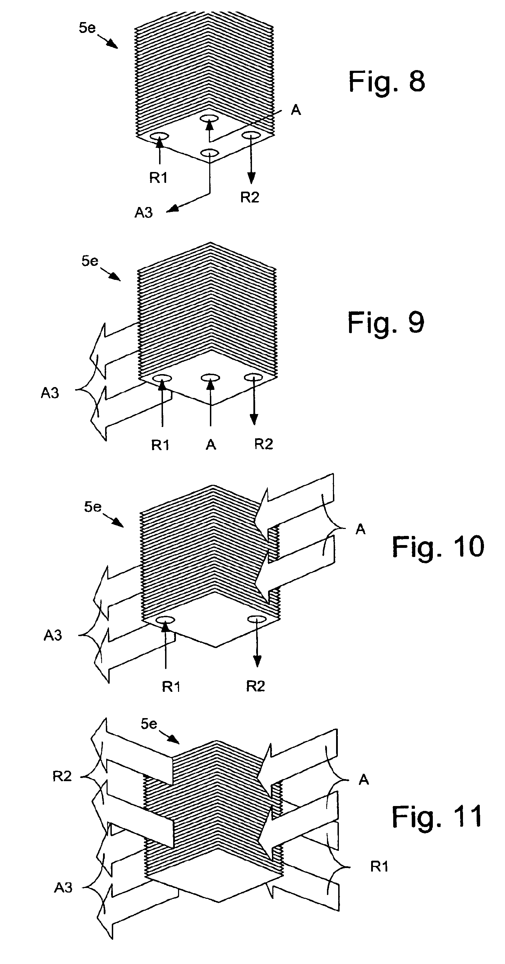

Figures 8 to 11 show in schematic views different embodiments of fuel cell stack 5e which are connected to a heat exchanger 3, which is not shown, but which would be ranged below the fuel cell stack 5e. All heat exchangers 3 suitable to accommodate a fuel cell stack 5e as disclosed in figures 8 to 11 may be built as disclosed in figure 2 or 3.

In the embodiment according to figure 10, the fuel cell stack 5e is arranged on top of the heat exchanger 3, and regarding the fuel gas stream R1 and the anode exhaust stream R2, there is a direct flow transition between them. In contrast, the air stream A is not feed from the bottom but from the side of the fuel cell stack 5e, and the cathode exhaust stream A3 escaping also from a side of the fuel cell stack 5e, but both streams A and A3 escaping within the fuel cell 5 to the heat exchanger 3. This embodiment requires manifolding means like pipes to provide gas connecting means between the heat exchanger 3 and the fuel cell stack 5e for the streams A and A3. The embodiment disclosed in figure 2 comprises a fuel cell stack 5e as disclosed in figure 10, whereas the manifolding means for the streams A and A3 are formed between the fuel cell stack 5e and a thin metal 51 surrounding the fuel cell stack 5e. This metal 51 is gas tightly connected with the bottom plate 5b and the top plate 5c.

Figure 8 discloses a further embodiment, with a fuel cell stack 5e having an air stream A and a fuel gas stream R1 entering at the bottom and the anode exhaust stream R2 and the cathode exhaust stream A3 escaping on the same side at the bottom of the fuel cell stack 5e. The fuel cell stack 5e and the heat exchanger 3 are built to comprise also the entire manifolding. Between the heat exchanger 3 and the fuel cell 5, additional pipes may be arranged, to allow an additional gas flow between the heat exchanger 3 and the fuel cell 5 or the insulation 6.

In the embodiment according to figure 9, the fuel cell stack 5e is arranged on top of the heat exchanger 3, and regarding the fuel gas stream R1, the anode exhaust stream R2 and the Air stream A, there is a direct flow transition between them. In contrast, the cathode exhaust stream A3 is not escaping at the bottom but from the side of the fuel cell stack 5e. This embodiment may require additional manifolding means like pipes to provide gas connecting means between the heat exchanger 3 and the fuel cell stack 5e for the stream A3. But in case of a gas tight Insulation 51 surrounding the fuel cell 5, the cathode exhaust may be guided without additional piping to the heat exchanger 3.

In the embodiment according to figure 11, the fuel cell 5 including the fuel cell stack 5e may be arranged separate from the heat exchanger 3. This embodiment requires additional manifolding means like pipes, to provide gas connecting means between the heat exchanger 3 and the fuel cell 5 for the streams A, A3, R1 and R2.

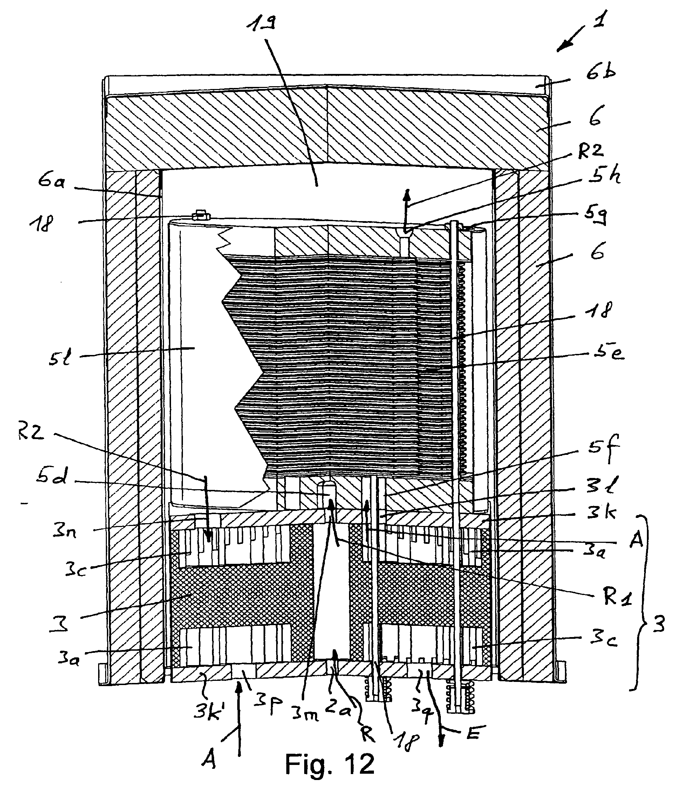

Figure 12 shows another SOFC system 1 build in form of a stack, comprising the heat exchanger 3 and the fuel cell 5, all together arranged within an insulation 6 with an inner and outer metallic shell 6a,6b. Advantageously, there is an interface base 2, not disclosed in figure 12, arranged below the heat exchanger 3. The heat exchanger 3 disclosed comprises also a base plate 3k as well as a second base plate 3k'. The interface base 2, if required, is arranged below the second base plate 3k'. There is an inner space 19 between the fuel cell 5 and the insulation 6, which is fluidly connected to the fuel cell 5 by the anode exhaust gas stream outlet port 5h, the exhaust gas outlet port 5g as well as by the exhaust gas stream inlet port 3n. The fuel cell 5 is arranged such on the base plate 3k, that the exhaust gas stream inlet port 3n is not directly connected to within the fuel cell 5, but leads into the inner space 19. Therefore, exhaust gas leaving the port 5h, 5g will enter the inner space 19 and thereafter exit the inner space 19 at inlet port 3n.

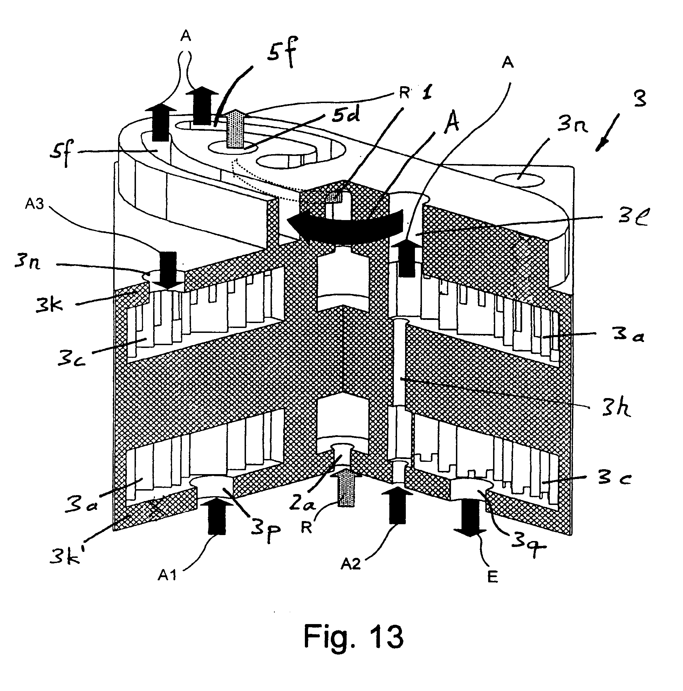

Figure 13 shows another embodiment of a heat exchanger 3. The base plate 3k as well as the second base plate 3k' consists also of ceramics and at least one of them is connected with the rest of the heat exchanger 3, for example sintered or glued, thereby forming a single, monolitic heat exchanger 3. This heat exchanger 3 has several advantages. The heat exchanger 3 is very compact, comprises all necessary fluid channels, is easy and cheap to manufacture, is very small and also very reliable. This heat exchanger 3 could be used in the SOFC system 1 as disclosed in figure 12. In an advantageous embodiment the heat exchanger 3 may, as disclosed in figure 12, also comprise the lower part of the fuel cell 5, which comprises fluid channels and the air stream inlet port 5f as well as the reactant gas stream inlet port 5d. This allows to further improve connecting the fluid channels of the heat exchanger 3 with the fuel cell 5. In an advantageous embodiment, as disclosed in figure 13, the air stream inlet port 5f and the reactant gas stream inlet port 5d entering the fuel cell 5 on the same side, allowing an about parallel flow of the air stream A and the reactant gas stream R1 within the fuel cell 5. Employing the heat exchanger 3 as disclosed in figure 13 in the fuel cell system 1 of figure 12 would mean that, according to the view of figure 12, both the air stream A and the reactant gas stream R1 entering the fuel cell 5 on the left side, the reactant gas exhaust stream R2 exiting the fuel cell 5 at port 5h and the air stream A3 exiting the fuel cell at port 5g on the right side, and both R2 and A3 entering the heat exchanger 3 at port 3n, and leaving the heat exchanger 3 as exhaust gas E at port 3q.

The heat exchanger 3 in a preferred embodiment comprises a base plate 3k suitable to be connected with the fuel cell 5. This base plate 3k is preferably able to carry the fuel cell 5, also when the fuel cell 5 is fixed by compression rods 18 with the heat exchanger 3, wherein the pressure load caused by the compression rods 18 exceeds the total weight of the fuel cell 5. Such a fuel cell 1 may be arranged in any direction, because the fuel cell 5 and the heat exchanger 3 are fixed to one another.

The term used herein "monolithic type heat exchanger" or "monolithic heat exchanger" means, that the heat exchanger consists of one single peace. For example the heat exchanger 3 disclosed in Figure 4, 5a und 5b is a monolithic heat exchanger, in that the heat exchanger 3 is made of hard brittle material produced from non-metallic minerals by firing at high temperatures, and being one single peace. As used herein the term "monolithic type heat exchanger" or "monolithic heat exchanger" also means a heat exchanger as disclosed in figure 12, which, beside the part 3 disclosed in figure 4, also comprises a base plate 3k and/or a second base plate 3k', which for example are sintered or glued together, to form the heat exchanger 3. As disclosed in figure 12, the material of the base plate 3k, 3k' may be different from the material of the rest of the heat exchanger 3. As disclosed in figure 13, the whole heat exchanger 3, including base plates 3k, 3k', may also consist in the same material.

## Claims

1. A SOFC system (1) for generating electric power by combination of oxygen with a fuel gas stream (R), including a fuel cell (5) having a fuel gas inlet port (5d), an air stream inlet port (5f) and an exhaust gas stream outlet port (5g), and comprising a heat exchanger (3) with a fuel channel (3f), wherein said heat exchanger (3) comprises a first fluid path (3a) with an inlet port (3p) connected to an air supply and an air stream outlet port (31) connected to the air stream inlet port (5f); and wherein said heat exchanger (3) comprises a second fluid path (3c) with an outlet port (3q) and an exhaust gas stream inlet port (3n) connected to the exhaust gas stream outlet port (5g); and wherein said fuel channel (3f) comprises a fuel supply and a fuel gas outlet port (3m) connected to the fuel gas inlet port (5d), wherein said heat exchanger (3) is a unit separate from the fuel cell (5), **characterised in that** the heat exchanger (3) consisting of ceramics, that said heat exchanger (3) comprising a base plate (3k) on which the fuel cell (5) being arranged, that the base plate (3k) may be of different material, and that at least one of air stream outlet port (31), exhaust gas stream inlet port (3n) and fuel gas outlet port (3m) extending through the base plate (3k).

2. The SOFT system of claim 1 wherein the fuel cell (5) is arranged on top of the base plate (3k), and the base plate (3k) is carrying the fuel cell (5).

3. The SOFC system of one of the proceeding claims wherein the heat exchanger (3) is a monolithic type heat exchanger (3).

4. The SOFC system of claim 3 wherein the base plate (3k) is of ceramics material.

5. The SOFC system of claim 4, wherein the base plate (3k) is part of the monolithic type heat exchanger (3).

6. The SOFC system of one of the proceeding claims wherein the air stream outlet port (31), the fuel gas outlet port (3m) and the exhaust gas stream inlet port (3n) are arranged on a common front surface (3r) of the heat exchanger (3).

7. The SOFT system of claim 6 wherein the inlet port (3p) connected to the air supply, the outlet port (3q) of the exhaust gas stream and the fuel channel (3f) connected to the fuel supply are arranged on a side of the heat exchanger (3) opposite to the front surface (3r).

8. The SOFC system of one of the proceeding claims wherein the fuel gas inlet port (5d), the air stream inlet port (5f) and the exhaust gas stream outlet port (5g) are arranged on a common front surface (5k) of the fuel cell (5).

9. The SOFC system of one of the proceeding claims wherein the fuel cell (5) is arranged on top of the heat exchanger (3), and wherein the corresponding inlet ports (5f, 3n,5d) and outlet ports (3l,5g,3m) enabling the gas stream flow between the fuel cell (5) and the heat exchanger (3) are arranged opposite to each other, to enable a direct flow transition between the fuel cell (5) and the heat exchanger (3).

10. The SOFC system of one of the proceeding claims wherein each of the first and second fluid path (3a,3c) comprise a first and second channel (3b,3d) separated by a thin wall, to allow a heat exchange between the exhaust gas stream flowing in the second channel (3d) and the air stream flowing in the first channel (3b).

11. The SOFC system of claim 10 wherein there is a plurality of first and second channels (3b,3d).

12. The SOFC system of claim 10 or 11 wherein the first and second channels (3b,3d) are arranged to form a counter cross flow between the first and second fluid path (3a,3c).

13. The SOFC system of one of the proceeding claims wherein the heat exchanger (3) comprises an afterburner (3o) arranged in the second fluid path (3c).

14. The SOFC system of one of the proceeding claims wherein the fuel channel (3f) comprises a catalytic fuel processor (3e), in particular a layer of catalytic substances.

15. The SOFC system of one of the proceeding claims wherein the heat exchanger (3) comprises an air stream bypass (3h) with an inlet port (2c) connected to an air supply and an air stream bypass outlet port (3t) disposed in fluid communication with the air stream outlet port (31).

16. The SOFC system of one of the proceeding claims wherein at least one valve (2f) is disposed to control at least one of the air streams in the first fluid path (3a) and the air stream bypass (3h).

17. The SOFC system of claim 16 wherein the valve (2f) is disposed below the heat exchanger (3).

18. The SOFC system of one of the proceeding claims, wherein an interface base (2) is disposed below the heat exchanger (3), the interface base (2) comprising a fuel gas stream inlet port (2a), an air stream inlet port (2b,2c) and a exhaust gas stream outlet port (2d), which are fluidly connected to the corresponding first and second fluid path (3a,3c), the fuel gas stream channel (3f) and the exhaust gas stream outlet port (3q) of the heat exchanger (3).

19. The SOFC system of claim 18 wherein the fuel gas stream inlet port (2a), the air stream inlet port (2b, 2c) and the exhaust gas stream outlet port (2d) are arranged at the bottom of the interface base (2).

20. The SOFC system of one of claims 18 and 19 wherein the interface base (2) is coupled to the heat exchanger (3) so that there is a direct flow transition from the interface base (2) to the heat exchanger (3), the heat exchanger (3) being placed on top of the interface base (2) and the fuel cell (5) being placed on top of the heat exchanger (3).

21. The SOFC system of claim 20 wherein the interface base (2) and the fuel cell (5) are connected by compressing means (18) extending through the heat exchanger (3).

22. The SOFC system of one of the proceeding claims wherein at least one of the first and second fluid path (3a,3c) comprises a channel with a rough surface.

23. The SOFC system of one of the proceeding claims wherein the fuel cell (5) is arranged within an insulation (6), the insulation comprising a fluid tight room with a fluid inlet and outlet, to create a vacuum within the room and/or to pressurize the room.

24. The SOFC system of one of the proceeding claims comprising a control unit (11) as well as sensors (15a-15e) and a valve (2f) being connected with the control unit (11), the valve (2f) determines the flow of an air stream (A1) and a bypass air stream (A2), the air stream (A1) and the bypass air stream (A2) forming a fuel cell air stream (A) supplied to the fuel cell (5), and the temperature and/or the amount of the fuel cell air stream (A) depending on the sensed values of the sensors (15a-15e) and being controlled by the control unit (11).

25. A heat exchanger (3) for a SOFC system (1), comprising a fuel channel (3f) with a fuel gas outlet port (3m), comprising a first fluid path (3a) with an air stream outlet port (31), comprising a second fluid path (3c) with an exhaust gas stream inlet port (3n), wherein said heat exchanger (3) consisting of ceramics, and wherein said heat exchanger (3) comprising a base plate (3k), and wherein at least one of air stream outlet port (31), exhaust gas stream inlet port (3n) and fuel gas outlet port (3m) extending through the base plate (3k), and wherein the heat exchanger (3), with the exception of the base plate (3k), is a monolithic type heat exchanger (3).

26. The heat exchanger (3) of claim 25, wherein the base plate (3k) is a part of the monolithic type heat exchanger (3).

## Patentansprüche

1. Ein SOFC Festoxid-Brennstoffzellensystem (1) zur Erzeugung elektrischer Energie durch das Zusammenführen von Sauerstoff mit einem Brenngasstrom (R), umfassend eine Brennstoffzelle (5) aufweisend eine Brenngaseinlassöffnung (5d), eine Luftstromeinlassöffnung (5f) und eine Abgasstromauslassöffnung (5g) und umfassend einen Wärmetauscher (3) mit einem Brennstoffkanal (3f), wobei der Wärmetauscher (3) einen ersten Fluidpfad (3a) mit einer Einlassöffnung (3p) umfasst die mit einer Luftzufuhr verbunden ist, und eine Luftstromauslassöffnung (31) die mit der Luftstromeinlassöffnung (5f) verbunden ist, und wobei der Wärmetauscher (3) einen zweiten Fluidpfad (3c) mit einer Auslassöffnung (3q) und einer Abgasstromeinlassöffnung (3n) umfasst die mit der Abgasstromauslassöffnung (5g) verbunden ist, und wobei der Brennstoffkanal (3f) eine Brennstoffversorgung und eine Brenngasauslassöffnung (3m) umfasst, die mit der Brenngaseinlassöffnung (5d) verbunden ist, wobei der Wärmetauscher (3) eine von der Brennstoffzelle (5) getrennte Einheit ist, **dadurch gekennzeichnet, dass** der Wärmetauscher (3) aus Keramik besteht, dass der Wärmetauscher (3) einer Grundplatte (3k) umfasst, auf welcher die Brennstoffzelle (5) angeordnet ist, dass die Grundplatte (3k) aus unterschiedlichem Material sein kann, und dass zumindest eine der Luftstromauslassöffnung (31), Abgaseinlassöffnung (3n) und Brenngasauslassöffnung (3m) durch die Grundplatte (3k) verläuft.

2. Das SOFC-System nach Anspruch 1, wobei die Brennstoffzelle (5) auf der Oberseite der Grundplatte (3k) angeordnet ist, und die Grundplatte (3k) die Brennstoffzelle (5) trägt.

3. Das SOFC-System nach einem der vorhergehenden Ansprüche, wobei der Wärmetauscher (3) ein monolithischer Wärmetauscher (3) ist.

4. Das SOFC-System nach Anspruch 3, wobei die Grundplatte (3k) aus keramischem Material besteht.

5. Das SOFC-System nach Anspruch 4, wobei die Grundplatte (3k) Teil des monolithischen Wärmetauschers (3) ist.

6. Das SOFC-System nach einem der vorhergehenden Ansprüche, wobei die Luftauslassöffnung (31), die Brenngasauslassöffnung (3m) und die Abgaseinlassöffnung (3n) auf einer gemeinsamen Vorderfläche (3r) des Wärmetauschers (3) angeordnet sind.

7. Das SOFC-System nach Anspruch 6, wobei die Einlassöffnung (3p), welche mit der Luftzufuhr verbunden ist, und die Auslassöffnung (3q) des Abgasstroms und der Brennstoffkanal (3f), welche mit der Brennstoffversorgung verbunden sind, auf einer Seite des Wärmetauschers (3) angeordnet sind, gegenüber der Vorderfläche (3r).

8. Das SOFC-System nach einem der vorhergehenden Ansprüche, wobei die Brenngaseinlassöffnung (5d), die Luftstromeinlassöffnung (5f) und die Abgasauslassöffnung (5g) auf einer gemeinsamen Vorderfläche (5k) der Brennstoffzelle (5) angeordnet sind.

9. Das SOFC-System nach einem der vorhergehenden Ansprüche, wobei die Brennstoffzelle (5) auf der Oberseite des Wärmetauschers (3) angeordnet ist, und wobei die entsprechenden Einlassöffnungen (5f, 3n, 5d) und Auslassöffnungen (3l, 5g, 3m), welche den Gasstromfluss zwischen der Brennstoffzelle (5) und dem Wärmetauscher (3) ermöglichen, einander gegenüberliegend angeordnet sind, um einen direkten Strömungsübergang zwischen der Brennstoffzelle (5) und dem Wärmetauscher (3) zu ermöglichen.

10. Das SOFC-System nach einem der vorhergehenden Ansprüche, wobei jeder der ersten und zweiten Fluidpfade (3a, 3c) einen ersten und zweiten Kanal (3b, 3d) umfasst, welche durch eine dünne Wand getrennt sind, um einen Wärmeaustausch zwischen dem Abgasstrom, welcher im zweiten Kanal (3d) fliesst, und dem Luftstrom, welcher im ersten Kanal (3b) fliesst, zu ermöglichen.

11. Das SOFC-System nach Anspruch 10, wobei es eine Mehrzahl von ersten und zweiten Kanälen (3b, 3d) gibt.

12. Das SOFC-System nach Anspruch 10 oder 11, wobei die ersten und zweiten Kanäle (3b, 3d) angeordnet sind, um eine entgegen gesetzte Querströmung zwischen dem ersten und zweiten Fluidpfad (3a, 3c) zu bilden.

13. Das SOFC-System nach einem der vorhergehenden Ansprüche, wobei der Wärmetauscher (3) einen Nachbrenner (3o) umfasst, der im zweiten Fluidpfad (3c) angeordnet ist.

14. Das SOFC-System nach einem der vorhergehenden Ansprüche, wobei der Brennstoffkanal (3f) einen katalytischen Brennstoffprozessor (3e) umfasst, insbesondere eine Schicht aus katalytisch wirkenden Substanzen.

15. Das SOFC-System nach einem der vorhergehenden Ansprüche, wobei der Wärmetauscher (3) einen Luftstrombypass (3h) umfasst mit einer Einlassöffnung (2c), die mit einer Luftzufuhr verbunden ist, und einer Luftstrombypassauslassöffnung (3t) angeordnet in Fluid leitender Verbindung mit der Luftstromauslassöffnung (31).

16. Das SOFC-System nach einem der vorhergehenden Ansprüche, wobei zumindest ein Ventil (2f) angeordnet ist um zumindest einen der Luftströme in dem ersten Fluidpfad (3a) und den Bypassluftstrom (3h) zu steuern.

17. Das SOFC-System nach Anspruch 16, wobei das Ventil (2f) unterhalb des Wärmetauschers (3) angeordnet ist.

18. Das SOFC-System nach einem der vorhergehenden Ansprüche, wobei eine Interfacebasis (2) unterhalb des Wärmetauschers (3) angeordnet ist, wobei die Interfacebasis (2) eine Brennstoffgaseinlassöffnung (2a), eine Luftstromeinlassöffnung (2b, 2c) und eine Abgasauslassöffnung (2d) umfasst, welche Fluid leitend mit dem entsprechenden ersten und zweiten Fluidpfad (3a, 3c), dem Brenngasstromkanal (3f) und der Abgasstromauslassöffnung (3q) des Wärmetauschers (3) verbunden sind.

19. Das SOFC-System nach Anspruch 18, wobei die Brenngaseinlassöffnung (2a), die Luftstromeinlassöffnung (2b, 2c) und die Abgasstromauslassöffnung (2d) an der Unterseite der Interfacebasis (2) angeordnet sind.

20. Das SOFC-System nach einem der Ansprüche 18 und 19, wobei die Interfacebasis (2) derart mit dem Wärmetauscher (3) gekoppelt ist, dass eine direkte Strömungsverbindung von der Interfacebasis (2) zu dem Wärmetauscher (3) besteht, wobei der Wärmetauscher (3) oben auf der Interfacebasis (2) und der Brennstoffzelle (5) oben auf dem Wärmetauscher (3) platziert ist.

21. Das SOFC-System nach Anspruch 20, wobei die Interfacebasis (2) und die Brennstoffzelle (5) durch Komprimierungsmittel (18) verbunden sind, welche durch den Wärmetauscher (3) verlaufen.

22. Das SOFC-System gemäss einem der vorhergehenden Ansprüche, wobei zumindest einer des ersten und zweiten Fluidpfades (3a, 3c) einen Kanal mit einer rauen Oberfläche umfasst.

23. Das SOFC-System nach einem der vorhergehenden Ansprüche, wobei die Brennstoffzelle (5) innerhalb einer Isolation (6) angeordnet ist, wobei die Isolation einen fluiddichten Raum mit einem Fluideinlass und -auslass umfasst, um ein Vakuum innerhalb des Raumes zu erzeugen und/oder den Raum unter Druck zu setzen.

24. Das SOFC-System nach einem der vorhergehenden Ansprüche, umfassend eine Steuereinheit (11) sowie Sensoren (15a - 15e) und ein Ventil (2f), welches mit der Steuereinheit (11) verbunden ist, wobei das Ventil (2f) den Durchfluss eines Luftstroms (A1) und ein Bypassluftstrom (A2) bestimmt, wobei der Luftstrom (A1) und der Bypassluftstrom (A2) einen Brennstoffzellenluftstrom (A) ausbilden welcher der Brennstoffzelle (5) zugeführt ist, und wobei die Temperatur und/oder die Menge des Brennstoffzellenluftstroms (A) abhängig ist von den erfassten Werten der Sensoren (15a bis 15e), und von der Steuereinheit (11) gesteuert wird.

25. Ein Wärmetauscher (3) für ein SOFC-System (1), umfassend einen Kraftstoffkanal (3f) mit einer Brennstoffgasauslassöffnung (3m), umfassend einen ersten Fluidpfad (3a) mit einer Luftstromauslassöffnung (31), umfassend einen zweiten Fluidpfad (3c) mit einer Abgasstromeinlassöffnung (3n), wobei der Wärmetauscher (3) aus Keramik besteht, und wobei der Wärmetauscher (3) eine Grundplatte (3k) umfasst, und wobei zumindest einer der Luftstromauslassöffnung (31), Abgaseinlassöffnung (3n) und Brenngasauslassöffnung (3m) durch die Grundplatte (3k) verläuft, und wobei der Wärmetauscher (3), mit Ausnahme der Grundplatte (3k), ein monolithischer Wärmetauscher (3) ist.

26. Der Wärmetauscher (3) nach Anspruch 25, wobei die Grundplatte (3k) ein Teil des monolithischen Wärmetauschers (3) ist.

## Revendications

1. Système de pile à combustible à oxyde solide (SOFC) (1) destiné à générer de l'énergie électrique par la combinaison d'oxygène avec un flux de gaz combustible (R), comprenant une pile à combustible (5) comportant un orifice d'admission de gaz combustible (5d), un orifice d'admission de flux d'air (5f) et un orifice de sortie de flux de gaz d'échappement (5g), et comprenant un échangeur de chaleur (3) ayant un canal à combustible (3f), dans lequel ledit échangeur de chaleur (3) comprend un premier trajet de fluide (3a) ayant un orifice d'admission (3p) relié à une alimentation en air et un orifice de sortie de flux d'air (31) relié à l'orifice d'admission de flux d'air (5f) ; et dans lequel ledit échangeur de chaleur (3) comprend un deuxième trajet de fluide (3c) ayant un orifice de sortie (3q) et un orifice d'admission de flux de gaz d'échappement (3n) relié à l'orifice de sortie de flux de gaz d'échappement (5g) ; et dans lequel ledit canal à combustible (3f) comprend une alimentation en combustible et un orifice de sortie de gaz combustible (3m) relié à l'orifice d'admission de gaz combustible (5d), dans lequel ledit échangeur de chaleur (3) est une unité séparée de la pile à combustible (5), **caractérisé en ce que** l'échangeur de chaleur (3) est constitué de céramique, **en ce que** ledit échangeur de chaleur (3) comprend un socle (3k) sur lequel la pile à combustible (5) est agencée, **en ce que** le socle (3k) peut être d'un matériau différent, et **en ce qu'**au moins un orifice parmi l'orifice de sortie de flux d'air (31), l'orifice d'admission de flux de gaz d'échappement (3n) et l'orifice de sortie de gaz combustible (3m) s'étend à travers le socle (3k).

2. Système de pile à combustible à oxyde solide (SOFC) selon la revendication 1, dans lequel la pile à combustible (5) est agencée au sommet du socle (3k) et le socle (3k) supporte la pile à combustible (5).

3. Système de pile à combustible à oxyde solide (SOFC) selon l'une des revendications précédentes, dans lequel l'échangeur de chaleur (3) est un échangeur de chaleur du type monolithique (3).

4. Système de pile à combustible à oxyde solide (SOFC) selon la revendication 3, dans lequel le socle (3k) est constitué d'un matériau en céramique.

5. Système de pile à combustible à oxyde solide (SOFC) selon la revendication 4, dans lequel le socle (3k) fait partie de l'échangeur de chaleur du type monolithique (3).

6. Système de pile à combustible à oxyde solide (SOFC) selon l'une des revendications précédentes, dans lequel l'orifice de sortie de flux d'air (31), l'orifice de sortie de gaz combustible (3m) et l'orifice d'admission de flux de gaz d'échappement (3n) sont agencés sur une surface avant commune (3r) de l'échangeur de chaleur (3).

7. Système de pile à combustible à oxyde solide (SOFC) selon la revendication 6, dans lequel l'orifice d'admission (3p) relié à l'alimentation en air, l'orifice de sortie (3q) du flux de gaz d'échappement et le canal à combustible (3f) relié à l'alimentation en combustible sont agencés sur un côté de l'échangeur de chaleur (3) opposé à la surface avant (3r).

8. Système de pile à combustible à oxyde solide (SOFC) selon l'une des revendications précédentes, dans lequel l'orifice d'admission de gaz combustible (5d), l'orifice d'admission de flux d'air (5f) et l'orifice de sortie de flux de gaz d'échappement (5g) sont agencés sur une surface avant commune (5k) de la pile à combustible (5).

9. Système de pile à combustible à oxyde solide (SOFC) selon l'une des revendications précédentes, dans lequel la pile à combustible (5) est agencée au sommet de l'échangeur de chaleur (3) et dans lequel les orifices d'admission correspondants (5f, 3m, 5d) et les orifices de sortie (3l, 5g, 3m) permettant au flux de gaz de circuler entre la pile à combustible (5) et l'échangeur de chaleur (3) sont agencés de façon opposée les uns aux autres, pour permettre une transition de circulation directe entre la pile à combustible (5) et l'échangeur de chaleur (3).

10. Système de pile à combustible à oxyde solide (SOFC) selon l'une des revendications précédentes, dans lequel chacun desdites premier et deuxième trajets de fluide (3a, 3c) comprend un premier canal et un deuxième canal (3b, 3d) séparés par une fine paroi, pour permettre un échange de chaleur entre le flux de gaz d'échappement circulant dans le deuxième canal (3d) et le flux d'air circulant dans le premier canal (3b).

11. Système de pile à combustible à oxyde solide (SOFC) selon la revendication 10, dans lequel il existe une pluralité de premier et deuxième canaux (3b, 3d).

12. Système de pile à combustible à oxyde solide (SOFC) selon la revendication 10 ou 11, dans lequel les premier et deuxième canaux (3b, 3d) sont agencés pour former un contre-écoulement transversal entre les premier et deuxième trajets de fluide (3a, 3c).

13. Système de pile à combustible à oxyde solide (SOFC) selon l'une des revendications précédentes, dans lequel l'échangeur de chaleur (3) comprend un dispositif de post-combustion (3o) agencé dans le deuxième trajet de fluide (3c).

14. Système de pile à combustible à oxyde solide (SOFC) selon l'une des revendications précédentes, dans lequel le canal à combustible (3f) comprend un dispositif de traitement de combustible catalytique (3e), en particulier une couche de substances catalytiques.

15. Système de pile à combustible à oxyde solide (SOFC) selon l'une des revendications précédentes, dans lequel l'échangeur de chaleur (3) comprend une dérivation de flux d'air (3h) ayant un orifice d'admission (2c) relié à une alimentation en air et un orifice de sortie de dérivation de flux d'air (3t) disposé en communication de fluide avec l'orifice de sortie de flux d'air (31).

16. Système de pile à combustible à oxyde solide (SOFC) selon l'une des revendications précédentes, dans lequel au moins une vanne (2f) est disposée pour réguler au moins l'un des flux d'air dans le premier trajet de fluide (3a) et la dérivation de flux d'air (3h).

17. Système de pile à combustible à oxyde solide (SOFC) selon la revendication 16, dans lequel la vanne (2f) est disposée en dessous de l'échangeur de chaleur (3).

18. Système de pile à combustible à oxyde solide (SOFC) selon l'une des revendications précédentes, dans lequel une base d'interface (2) est disposée en dessous de l'échangeur de chaleur (3), la base d'interface (2) comprenant un orifice d'admission de flux de gaz combustible (2a), un orifice d'admission de flux d'air (2b, 2c) et un orifice de sortie de flux de gaz d'échappement (2d), qui sont reliés pour une communication de fluide au premier et au deuxième trajets de fluide correspondants (3a, 3c), au canal de flux de gaz combustible (3f) et à l'orifice de sortie de flux de gaz d'échappement (3q) de l'échangeur de chaleur (3).

19. Système de pile à combustible à oxyde solide (SOFC) selon la revendication 18, dans lequel l'orifice d'admission de flux de gaz combustible (2a), l'orifice d'admission de flux d'air (2b, 2c) et l'orifice de sortie de flux de gaz d'échappement (2d) sont agencés au fond de la base d'interface (2).

20. Système de pile à combustible à oxyde solide (SOFC) selon l'une des revendications 18 et 19, dans lequel la base d'interface (2) est couplée à l'échangeur de chaleur (3) de sorte qu'il existe une transition de circulation directe de la base d'interface (2) à l'échangeur de chaleur (3), l'échangeur de chaleur (3) étant placé au sommet de la base d'interface (2) et la pile à combustible (5) étant placée au sommet de l'échangeur de chaleur (3).

21. Système de pile à combustible à oxyde solide (SOFC) selon la revendication 20, dans lequel la base d'interface (2) et la pile à combustible (5) sont reliées par un moyen de compression (18) s'étendant à travers l'échangeur de chaleur (3).

22. Système de pile à combustible à oxyde solide (SOFC) selon l'une des revendications précédentes, dans lequel au moins l'un des premier et deuxième trajets de fluide (3a, 3c) comprend un canal ayant une surface rugueuse.

23. Système de pile à combustible à oxyde solide (SOFC) selon l'une des revendications précédentes, dans lequel la pile à combustible (5) est agencée au sein d'une isolation (6), l'isolation comprenant une chambre hermétique aux fluides ayant une entrée et une sortie de fluide, pour créer un vide dans la chambre et/ou pour mettre sous pression la chambre.

24. Système de pile à combustible à oxyde solide (SOFC) selon l'une des revendications précédentes, comprenant une unité de commande (11) de même que des capteurs (15a à 15e) et une vanne (2f) qui est connectée à l'unité de commande (11), la vanne (2f) détermine l'écoulement d'un flux d'air (A1) et d'un flux d'air de dérivation (A2), le flux d'air (A1) et le flux d'air de dérivation (A2) formant un flux d'air de pile à combustible (A) fourni à la pile à combustible (5), et la température et/ou la quantité du flux d'air de pile à combustible (A) dépendant des valeurs détectées des capteurs (15a à 15e) et étant régulées par l'unité de commande (11).

25. Echangeur de chaleur (3) destiné à un système de pile à combustible à oxyde solide (SOFC) (1), comprenant un canal à combustible (3f) ayant un orifice de sortie de gaz combustible (3m), comprenant un premier trajet de fluide (3a) ayant un orifice de sortie de flux d'air (31), comprenant un deuxième trajet de fluide (3c) ayant un orifice d'admission de flux de gaz d'échappement (3n), où ledit échangeur de chaleur (3) est constitué de céramique, et où ledit échangeur de chaleur (3) comprend un socle (3k), et où au moins l'un de l'orifice de sortie de flux d'air (31), de l'orifice d'admission de flux de gaz d'échappement (3n) et de l'orifice de sortie de gaz combustible (3m) s'étend à travers le socle (3k), et où l'échangeur de chaleur (3), à l'exception du socle (3k), est un échangeur de chaleur de type monolithique (3).

26. Echangeur de chaleur (3) selon la revendication 25, dans lequel le socle (3k) fait partie de l'échangeur de chaleur de type monolithique (3).
